# EUROPEAN PATENT SPECIFICATION

(11) **EP 2 167 280 B1**
(45) Date of publication and mention of the grant of the patent: **07.03.2012**
(21) Application number: 08763534.8
(22) Date of filing: 05.06.2008
(51) Int. Cl.: B24B 45/00

(54) **ATTACHMENT MECHANISM**
BEFESTIGUNGSMECHANISMUS
MECANISME DE FIXATION

(30) Priority: 06.06.2007 IL 18372107; 20.06.2007 IL 18409107; 19.07.2007 IL 18474207; 10.10.2007 IL 18656907; 11.03.2008 IL 19010008; 19.03.2008 IL 19031608
(43) Date of publication of application: 31.03.2010
(73) Proprietor: No Screw Ltd., 58117 Holon (IL)
(72) Inventor: HARIF, Gershon, 52503 Ramat-Gan (IL)
(74) Representative: Modiano, Micaela Nadia
(86) International application number: PCT/IL2008/000776
(87) International publication number: WO 2008/149369

(56) References cited:
- EP-A- 0 588 713
- WO-A-2005/063439
- US-A- 3 889 333

## Description

### FIELD OF THE INVENTION

This invention relates to attachment mechanism, in particular, mechanism adapted to be securely engaged with one another.

### BACKGROUND OF THE INVENTION

There is known a variety of attachment mechanisms adapted to be securely attached to one another in order to hold or clamp an article therebetween. One of the most common of such mechanisms is a bolt and nut arrangement, in which two articles may be secured to one another by passing the bolt therethrough and providing a nut on the opposite end, thereby preventing axial displacement of the two articles with respect ton one another.

Document EP0588713 discloses an attachment arrangement according to the preamble of claim 1.

### SUMMARY OF THE INVENTION

According to one aspect of the present invention, there is provided an attachment arrangement according to claim 1.

It should be understood that the term '*aligned*' refers to a configuration in which said bottom face and said bottom surface are generally parallel to one another. It should also be understood that said bottom face and bottom surface do not necessarily have to be in contact with one another, i.e. may be spaced from one another.

In addition, it is to be further understood that the term *'attaching position'* is used hereinafter to define a position allowing not only attaching of the second member onto the first member, but also disattaching of the second member therefrom, as well as releasing the second member to a certain extent allowing changing orientation thereof.

According to a specific example of the present invention, the arrangement may be such that in both positions said proximal end may be located within said attaching portion bore. Alternatively, according to another example, said attaching portion bore may be adapted for receiving an intermediary arrangement having a bore adapted to receive said securing pin, in which case in both positions, said proximal end located within the bore of said intermediary arrangement.

Said second member is further formed with a side face, wherein when the second member is secured within the attaching portion of the first member, the securing pin being adapted to apply pressure on the inner surface of said second member bore so as to facilitate firm engagement of said at least one side face with said at least one side wall of said attaching portion.

The arrangement of said securing pin and the inner surface of said second member is such that the pin axis is angled to the inner surface of said second member to thereby apply pressure to said inner surface in the direction of said at least one side wall, i.e. such that a portion of the second member defined between the inner surface and said at least one side face, facing the side wall of said attaching portion is fastened between the distal end of said securing pin and said side wall. Such an arrangement may be achieved by any of the following configurations:
- the securing pin has a surface portion pin axis is perpendicular to the bottom surface of said attaching portion and the inner surface of said second member is angled to bottom face thereof;
- the pin axis is angled to the bottom surface, i.e. not perpendicular thereto and the inner surface of said second member is perpendicular to said bottom face; and
- both the pin axis and the inner surface are angled, i.e. not perpendicular, to the bottom surface of the attaching portion and the bottom face of the second member respectively.

It should also be noted in this connection that the angle between the bottom surface of said attaching portion and said at least one side wall is not limited to an acute angle and may be a straight angle (90°) and may even be an obtuse angle.

Said displacement arrangement may be an arrangement separate from the securing pin adapted to mechanically engage the securing pin, or the proximal end thereof, such that displacement of the arrangement entails displacement of the securing pin in the axial direction. Examples of such arrangement may be a biasing spring, a bolt or a wedge adapted to press against the securing pin.

In particular, when a biasing spring is used as suggested above, it may be arranged such that the securing pin is constantly urged by the biasing spring into said securing position. Thus, switching the securing pin's position to the attaching position may be achieved by simple depression of the biasing spring.

Specifically, in order to release a second member from the first member, depression of the biasing spring may be achieve by applying pressure on the securing pin. According to one example, the second member may be formed such that the second member bore is open at both ends, i.e. at the top and bottom face, wherein a pressure instrument may be second member into the bore through the top face of the second member to, apply pressure to the distal end of the securing pin for depression of the biasing spring. According to another example, said securing pin may be formed with a nook and said first member or said second member is formed with a recess, arranged so as to be aligned with said nook at said securing position. Thus, a pressure instrument may be second member into said recess to be received within said nook and apply pressure to said securing pin for depression of the biasing spring.

Alternatively, the securing pin may be integrally formed with the displacement arrangement, such that displacement of the pin in a certain direction entails its axial movement. One example of such an arrangement may be one in which said securing pin is formed with an external thread receivable within an inner thread of said attaching portion bore such that rotation of the pin entails progression thereof along the axial direction. The securing pin may be formed at one of its ends with a bolt head adapted for receiving a rotary instrument such as a screwdriver adapted for rotation of the securing pin.

In particular, said securing pin may be designed such that the distal end thereof is formed with the bolt head, wherein said rotary instrument is adapted to engage the securing pin from the top, i.e. such that is first passes through said second member to engage the bolt head. In such a case, the second member bore may have an opening at both the top and bottom face. Alternatively, said proximal end may be formed with said bolt head wherein said rotary instrument is adapted to engage the securing pin from the bottom, i.e. such that is first passes through the first member to engage the bolt head.

However, as previously defined, in displacement of the securing pin between the attaching position and the securing pin, the distal end of the securing pin, regardless of its being formed with a bolt head or not, is displaced farther away from the bottom surface and into the attaching portion.

The securing mechanism may be formed with an second member bore adapted to receive a securing pin of the securing mechanism, and a bottom and side faces adapted for alignment against corresponding bottom surface and side walls in a manner similar to that previously described. Particularly, the arrangement may be such that the first member is formed with two counter disposed shoulders, each having a side surface of the first member, wherein the second member is securely held in place and prevented from rotating in one direction (e.g. CW) due to the side surface, and to the other direction (CCW) due to the securing pin.

In addition, the bottom surfaces of the first member are not limited to a planar shape and may have a variety of configuration including spiral, helical, circular etc. In particular, when both the first member and the second member are of circular shape, and are formed with corresponding helical bottom face and bottom surface, the arrangement may be such that the second member is allowed to slidingly displace on the first member until it reaches a locking position.

Additionally, the bottom surface of the attaching portion of the first member may have a conical configuration with respect to the central axis thereof, e.g. having an outer edge and an inner edge, the outer edge being positioned axially lower with respect to the inner edge. The bottom face of the mounting portion of the second member may have a corresponding opposite configuration, i.e. having an outer edge and an inner edge, the outer edge being positioned axially higher with respect to the inner edge. Such a configuration may facilitate automatic self centralizing of the second member with respect to the first member.

Said positioning element may be adapted to be aligned with a corresponding positioning portion of said first member. For example, said positioning element may be an extension receivable within a corresponding bore of said first member. The positioning portions of the second member and of the first member may be formed with a bayonet arrangement, for further securing the second member from disengaging from the first member.

Each of said first and second members may be formed with a flanged portion such that when attached to one another, a gap is formed which may be used for clamping an article between the first member and the second member.

It should be understood that the attachment mechanism previously disclosed in not limited to attachment of two members to one another, but also facilitates the secure clamping of a third article therebetween. Thus, the attachment mechanism may be effectively used similarly to a bolt and nut assembly. For example, the attachment mechanism may be used to secure a grindstone adapted to revolve at high revolution speeds.

According to yet another aspect of the present invention there is provided a method for attaching a second member to a first member, said method including: providing an attachment arrangement according to claim 1, and further
- displacing a securing pin of said first member into a first, attaching position in which the distal end thereof protrudes from within the attaching portion bore through said bottom surface into said attaching portion to a first extent;
- placing said second member onto said attaching portion such that the bottom face thereof is aligned with the bottom surface of said attaching portion; and
- displacing said securing pin into a second, securing position in which said distal end protrudes from within the attaching portion bore through said bottom surface into said attaching portion to a second extent, greater than said first extent, so as to engage the inner surface of said second member bore, thereby securing said second member in place;

### BRIEF DESCRIPTION OF THE DRAWINGS

In order to understand the invention and to see how it may be carried out in practice, embodiments will now be described, by way of non-limiting example only, with reference to the accompanying drawings, in which:
Fig. 1 is an isometric view of an attachment arrangement according to one embodiment of the present invention;
**Fig. 2** is an enlarged view of a detail I shown in Fig. 1;
**Fig. 3** is a top view of the attachment mechanism shown in Fig. 1;
**Fig. 4** is a cross-sectional view taken along line B-B in Fig. 3;
**Fig. 5** is a cross-sectional view taken along line A-A in Fig. 3;
**Fig. 6** is an enlarged view of detail C shown in Fig. 3;
**Fig. 7** is an isometric view of a part of the attachment mechanism shown in Fig. 1;
**Fig. 8** is an enlarged view of detail D shown in Fig. 7;
**Fig. 9** is an isometric view of an attachment arrangement according to another embodiment of the present invention;
**Fig. 10** is a top view of the attachment mechanism shown in Fig. 9;
**Fig. 11** is a cross-sectional view taken along line B-B in Fig. 10;
**Fig. 12** is a cross-sectional view taken along line A-A in Fig. 10;
**Fig. 13** is an isometric view of a part of an attachment arrangement according to another embodiment of the present invention; and
**Fig. 14** is an isometric view of an assembled attachment mechanism a part of which is shown in Fig. 13

### DETAILED DESCRIPTION OF EMBODIMENTS

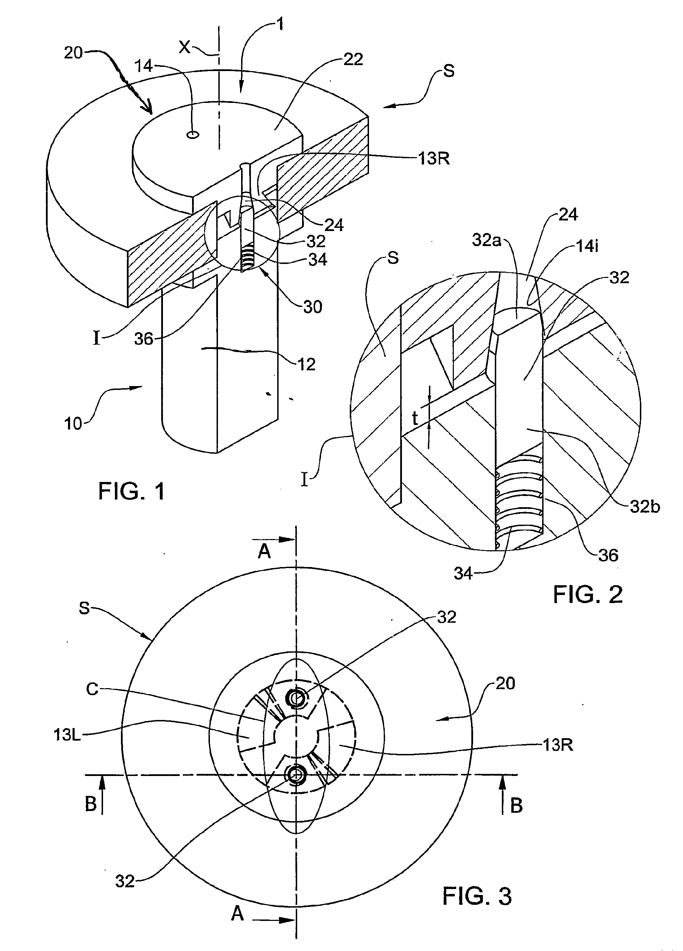

With reference to Figs. 1 to 8 an attachment arrangement generally designated **1** is shown comprising a first member **10** attached to a second member **20** by a securing mechanism **30,** and clamping therebetween a grindstone S.

The first member 10 is formed with a circular base surface 12 having a central axis X, a left and a right shoulder 13L, 13R respectively axially extending therefrom, and a flange portion 16 located adjacent the base surface on a side opposite the shoulders 13L, 13R and having a diameter greater than that of the base surface. Each shoulder 13 is formed with a shoulder bore 36 adapted to house a securing pin 32 and a biasing spring 34 and an inclined side surface 15 having a helical shape.

The second member 20 is similarly formed with a base surface 22, two shoulders 23 having a similar configuration to that of the first member 10, and a flange portion 26 having a diameter greater than that of the base surface 22. Each shoulder 23 is formed with side helical surface 25 and a conical bore 24 adapted to receive therein the securing pin 32.

In assembly, the arrangement is such that the first and second member 10, 20 are arranged such that the shoulders thereof are facing one another, and the securing pins 32 of the first member 10 are received within the bores 24 of the second member 10.

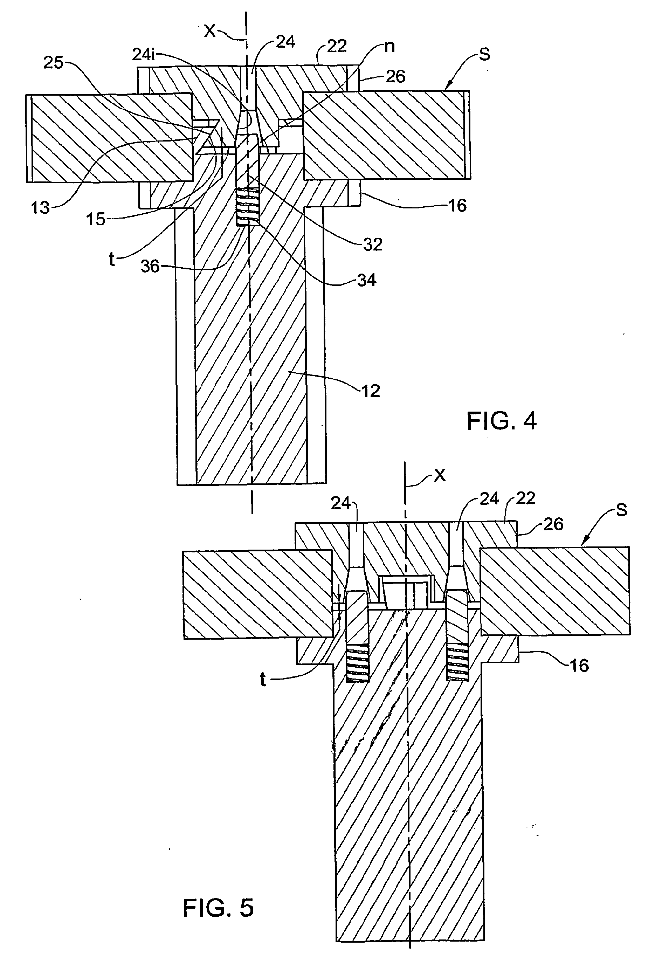

With particular reference to Figs. 2 and 4, in the assembled position, the securing pin 32 engages and bears against the inner surface 24i of the second member 20, and is urged axially upwards by the biasing spring 34. It is also observed that axial displacement of the securing pin 32 entails lateral displacement of the second member 20, and consequently the side face 25 thereof towards the side surface 15 of the first member, thereby securing the second member 20 in place. Since each of the members 10, 20 has a circular symmetry, the second member 20 is urged to rotate about the central axis to be come firmly secured to the first member 10.

However, it is noted that while axial upward displacement of the securing pin 32 entails lateral displacement of the second member 20, an attempt to laterally displace the second member 20 with respect to the first member will not entail axial downward displacement of the securing pin 32. This is due to the angle between the inner surface 24i of the bore 24 and the central axis, which is close to 0°. In the present example, the angle α ≅ 10°.

When attaching the second member 20 to the first member 10, it is first required to displace the securing pins 32 to an attachment position, allowing placing the second member 20 onto the first member 10. Displacing into an attachment position may be achieved by depressing the securing pin 32 such that it is received within the bore 36 to an extent in which the distal end *de* thereof does not prevent attachment of the second member 20 onto the first member.

Depression of the securing pin 32 may be achieved either by using an instrument to apply pressure on the distal end de of the securing pin 32, or by applying pressure using the second member 20 itself. Fir example, the following steps of attachment may take place:
- placing the second member 20 onto the first member such that the side surfaces 25 thereof engage the distal ends de of the securing pins 32;
- pressing down on the securing pins 32 using the second member 20 until depressed to an attachment position; and
- rotating the second member 20 with respect to the first member 10 until the securing pins 32 are free to enter the bore 24 and secure the second member 20 in place.

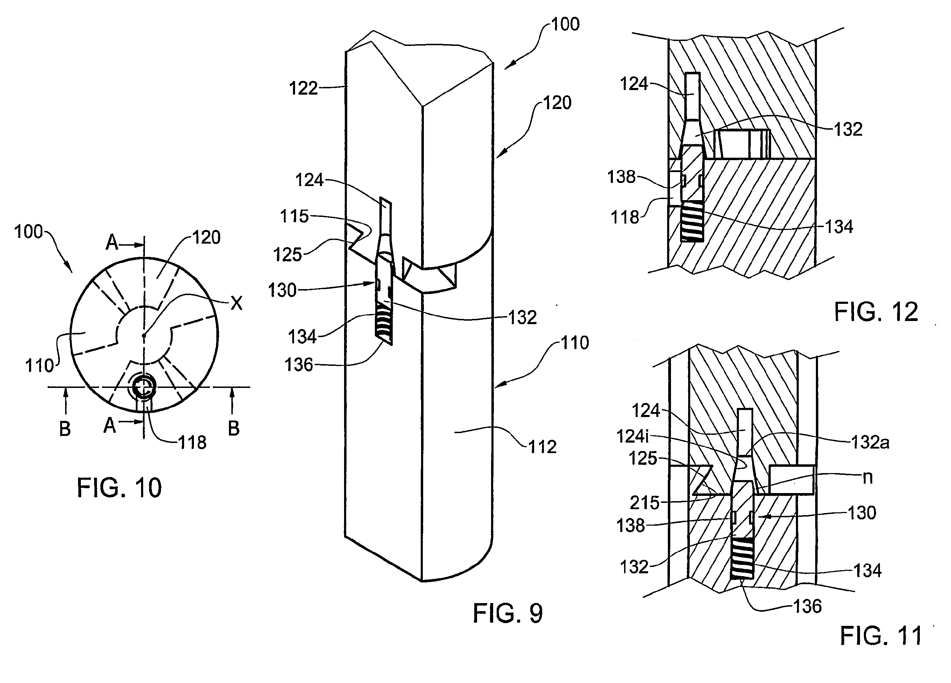

In order to release the second member 20 from the first member 10, the securing pins 32 are required to be depressed back into an attachment position. This may be achieved by inserting an instrument from the open side of the bore 24 and depressing the securing pin 32, or alternatively, as will be shown with reference to Figs. 9 to 12, by inserting an instrument into a side recess formed in one of the members 10, 20 and aligned with a special nook in the securing pin 32 (shown Fig. 12).

When the attachment mechanism 1 is used to clamp an article, such as the grindstone S, the thickness of the grindstone S determines the contact area between the securing pin 32 and the inner surface 24i, and between the side surfaces 15, 25 of the two members. It is evident that the thicker the grindstone S, the smaller the contact area. Thus, in order to provide secure clamping, the grindstone S may assume thicknesses ranging from a low thickness in which there is full overlap between the side surfaces 15, 25 to a high thickness in which there is almost no overlap, and the distal end of the shoulder 23 is adjacent the distal end of the shoulder 13.

It is also noted in Fig. 4 that there exists a gap n between the first member 10 and the second member 20. This gap allows a certain amount of elasticity and may vary during rapid revolution of the grindstone.

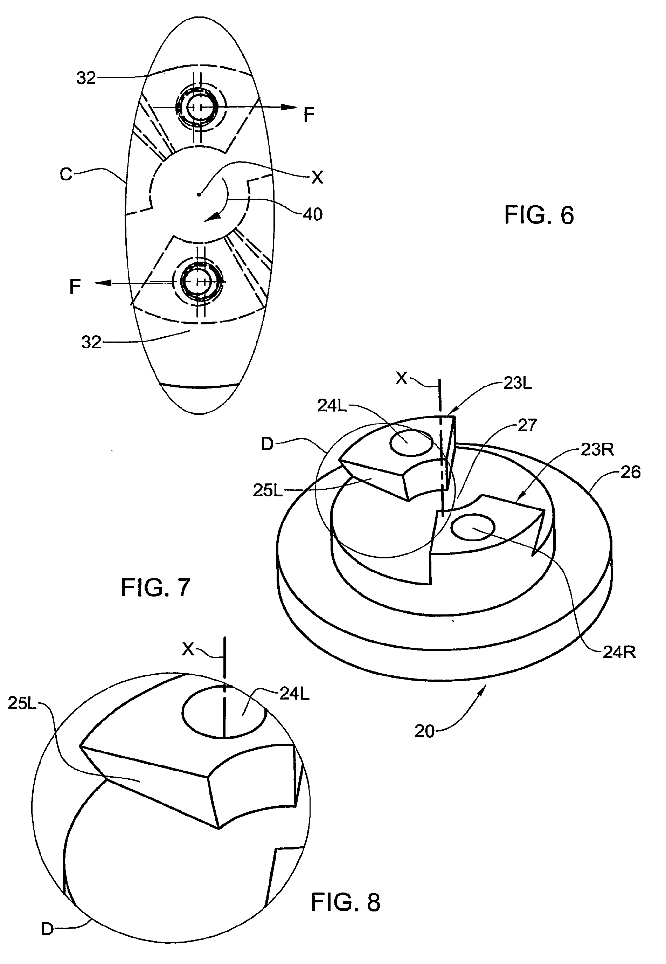

With particular reference to Fig. 6, it is observed that the attachment mechanism disclosed herein is used for a rotation operation, wherein the securing pins 32 are arranged such that they apply pressure in opposite directions as noted by arrows F.

Turning now to Figs. 9 to 12, another embodiment of the attachment mechanism generally designated 100 is shown comprising a first member 110, and a second member 120 attached thereto using a securing mechanism 130. The attachment mechanism 100 may be used for connecting two shafts together.

The first member 110 is formed with a circular base surface 112 having a central axis X, a left and a right shoulder 113L, 113R respectively axially extending therefrom. Each shoulder 113 is formed with a shoulder bore 136 adapted to house a securing pin 132 and a biasing spring 134 and an inclined side surface 115 having a helical shape.

The second member 120 is similarly formed with a base surface 122, two shoulders 123 having a similar configuration to that of the first member 110. Each shoulder 123 is formed with side helical surface 125 and a conical bore 124 adapted to receive therein the securing pin 132.

The attachment mechanism 100 operates in much the same manner as the attachment mechanism 10 previously disclosed with the difference being that only one securing pin 132 is used as opposed to two in previous embodiment. This however, does not damage the attachment mechanism due to the engagement between the side surfaces 115, 125 of the first and second member 110, 120 respectively.

In addition, the bores 124 are only open at one end thereof. Thus, in order to depress the securing pin 132 to an attachment position, the first member 110 is formed with a side bore 118, and the securing pin 132 is formed with a nook. The arrangement is such that when in the securing position, the nook 138 of the securing pin 132 is accessible through the side bore 118, allowing an operator to depress the securing pin 132 and release the second member 120 from the first member 110.

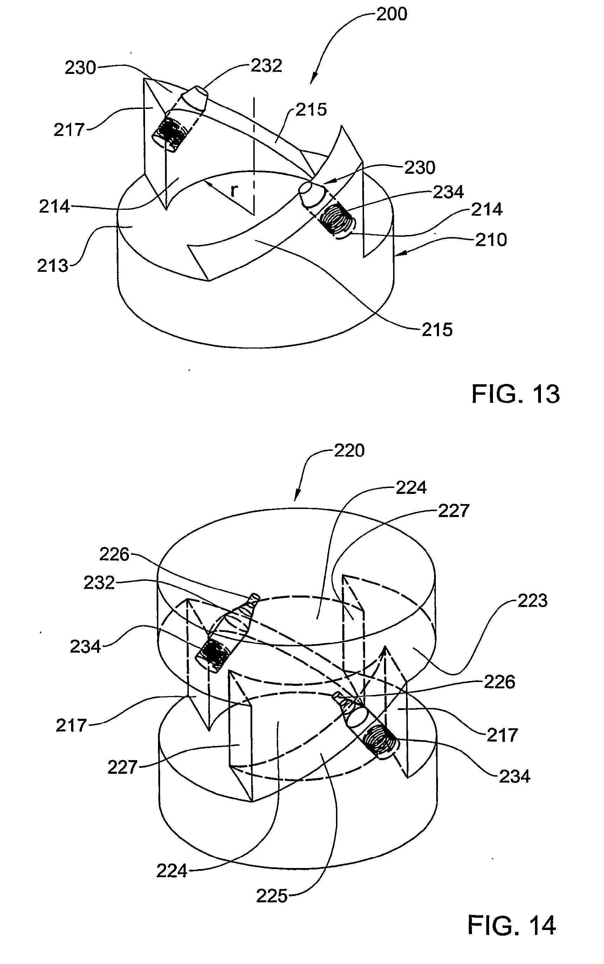

Turning now to Figs. 13 and 14, another embodiment of the attachment mechanism generally designated 200 is shown in which the first and second member 210, 220 are formed with shoulders 214, 224 each having an inclined surface 215, 225. The first member 210 is formed with bores 236 open at the inclined surface 215 and adapted to receive therein a securing mechanism 230 similar to that previously disclosed. The second member 220 is similarly formed with bores 226 at the inclined surfaces 225 thereof adapted to receive the securing pin 232 in a manner similar to that previously described.

The difference in the present embodiment lies in the fact that the same inclines surface 215, 225 in from which the securing pins 232 protrudes is used as the side surface having a function similar to that of the side surface denoted by 25 in Fig. 7.

However, the securing pins 232 in the present embodiment may be inclined with respect to the surface 215, i.e. not perpendicular thereto, and may have an angle such that the distal ends thereof face outwardly, or inwardly from the central axis X, for firm securing of the two members 210, 220 to one another.

In assembly, the attachment mechanism 200 is similar to that disclosed with respect to the attachment mechanism 10 and 100.

## Claims

1. An attachment arrangement (1) comprising a first member (10, 110, 210) adapted for securely attaching thereon a second member (20, 120, 220) having a top face, a bottom face and formed with a second member bore (24, 124, 224) having an inner surface (24i, 124i) extending between said top and said bottom face; said first member (10, 110, 210) comprising an attaching portion defined by a bottom surface (12, 112, 212) and at least one side wall (15, 115, 215) angled to said bottom surface to form a shoulder (13, 113) axially extending therefrom, an attaching portion bore (36, 136) with a bore axis having an open end at the bottom surface of said attaching portion, and a securing mechanism (30, 130, 230) for securing said second member in said attaching portion, said securing mechanism comprising a securing pin (32, 132, 232) received within said attaching portion bore (36, 136) and having a body with an outer surface extending between a proximal end (32b, 132b, 232b) and a distal end (32a, 132a, 232a) of the body and defining a pin axis therealong, and a displacement arrangement (34, 134, 234) adapted for axially displacing said securing pin along the bore axis of said attaching portion bore between at least a first, attaching position in which said distal end protrudes from within the attaching portion bore through said bottom surface into said attaching portion to a first extent so as to allow said second member to be placed within the attaching portion, having its bottom face aligned against said bottom surface, and a second, securing position in which said distal end protrudes from within the attaching portion bore through said bottom surface into said attaching portion to a second extent, greater than said first extent, so as to engage the inner surface of said second member bore, thereby securing said second member in place, such that, when the second member is secured within the attaching portion of the first member, a portion of the second member defined between the inner surface (24i, 124i) and at least one side face (25, 125, 225) of the second member (20, 120, 220) facing the side wall (15, 115, 215) of said attaching portion is fastened between the distal end (32a, 132a, 232a) of said securing pin (32, 132, 232) and said side wall (15,115,215), and **characterised in that** the pin axis is angled to the inner surface (24i, 124i) of said second member when the second member is secured within the attaching portion of the first member and the securing pin is adapted to apply pressure on the inner surface of said second member bore, thereby facilitating firm engagement of the at least one side face of the second member (20, 120, 220) with said at least one side wall of said attaching portion of the first member.

2. An attachment arrangement according to Claim 1, wherein in both said attachment position and said securing position, said securing pin remains in engagement with the first member.

3. An attachment arrangement according to Claim 1 or 2, wherein in both said attachment position and said securing position, said proximal end is located within said attaching portion bore.

4. An attachment arrangement according to any one of Claims 1 to 3, wherein said displacement arrangement is an arrangement separate from the securing pin adapted to mechanically engage the securing pin, or the proximal end thereof, such that displacement of the anangement entails displacement of the securing pin in the axial direction.

5. An attachment arrangement according to Claim 4, wherein said displacement mechanism is a biasing spring, such that switching the securing pin's position to the attaching position is achieved by simple depression of the biasing spring.

6. An attachment arrangement according to any one of Claims 1 to 5, wherein the first member is formed with two counter disposed shoulders (13, 113), each having a side surface (15, 115, 125), wherein the second member is securely held in place and prevented from rotating in one direction (e.g. CW) due to the side surface, and to the other direction (CCW) due to the securing pin.

7. An attachment arrangement according to Claim 6, wherein the side surfaces of the first member are of helical shape.

8. An attachment arrangement according to Claim 7, wherein both the first member and the second member are of circular shape, and are formed with corresponding helical side surfaces.

9. An attachment arrangement according to Claim 6, 7 or 8, wherein the bottom surface of the attaching portion of the first member has a conical configuration with respect to the central axis thereof, e.g. having an outer edge and an inner edge, the outer edge being positioned axially lower with respect to the inner edge.

10. An attachment arrangement according to Claim 9, wherein the configuration facilitates automatic self centralizing of the second member with respect to the first member.

11. An attachment arrangement according to any one of the preceding Claims, wherein each of said first and second members is formed with a flanged portion (16, 26) such that when attached to one another, a gap (n) is formed between the flanged portions allowing the clamping of an article (S) therebetween.

12. An attachment arrangement according to Claim 11, wherein each shoulder is formed with an inclined bottom surface (215, 225) adapted to provide additional lateral support to the second member.

13. An attachment arrangement according to Claim 12, wherein said first member is of round shape and has a central axis, and wherein said securing pin is inclined to a first angle due to the inclination of said bottom surface, and is further inclined at a second angle with respect to the central axis.

14. A method for attaching a second member to a first member, said method including:
Providing an attachment arrangement according to Claim 1, and further
i. displacing a securing pin of said first member into a first, attaching position in which the distal end thereof protrudes from within the attaching portion bore through said bottom surface into said attaching portion to a first extent;
ii. placing said second member onto said attaching portion such that the bottom face thereof is aligned with the bottom surface of said attaching portion; and
iii. displacing said securing pin into a second, securing position in which said distal end protrudes from within the attaching portion bore through said bottom surface into said attaching portion to a second extent, greater than said first extent, so as to engage the inner surface of said second member bore, thereby securing said second member in place.

## Patentansprüche

1. Eine Befestigungsanordnung (1), die ein erstes Glied (10, 110, 210) umfasst, ausgebildet zur sicheren Befestigung eines zweiten Glieds (20, 120, 220) daran, das eine obere Fläche, eine untere Fläche hat und mit einer zweiten Gliedbohrung (24, 124, 224) versehen ist, die eine innere Oberfläche (24i, 124i) hat, welche sich zwischen der oberen und der unteren Fläche erstreckt; wobei das erste Glied (10, 110, 210) einen Befestigungsabschnitt umfasst, der von einer unteren Oberfläche (12, 112, 212) und mindestens einer Seitenwand (15, 115, 215) bestimmt wird, die winklig an der unteren Oberfläche angebracht ist, um eine Schulter (13, 113) zu bilden, welche sich axial davon erstreckt, eine) Befestigungsabschnittsbohrung (36, 136) mit einer Bohrachse, die an der unteren Oberfläche des Befestigungsabschnitts ein offenes Ende hat, und einen Sicherungsmechanismus (30, 130, 230) zur Sicherung des zweiten Glieds in dem Befestigungsabschnitt, wobei der Sicherungsmechanismus einen Sicherungsstift (32, 132, 232) umfasst, der in der Befestigungsabschnittsbohrung (36, 136) aufgenommen wird und einen Körper mit einer äußeren Oberfläche hat, die sich zwischen einem proximalen Ende (32b, 132b, 232b) und einem distalen Ende (32a, 132a, 232a) des Körpers erstreckt und dort entlang eine Stiftachse bestimmt, und eine Verschiebungsanordnung (34, 134, 234), ausgebildet zur axialen Verschiebung des Sicherungsstifts entlang der Bohrachse der Befestigungsabschnittsbohrung zwischen mindestens einer ersten Befestigungsposition, in welcher das distale Ende in einem ersten Grad aus der Befestigungsabschnittsbohrung durch die untere Oberfläche in den Befestigungsabschnitt hineinragt, um es dem zweiten Glied zu ermöglichen, in den Befestigungsabschnitt platziert zu werden, wobei seine untere Fläche mit der unteren Oberfläche fluchtet, und einer zweiten Sicherungsposition, in welcher das distale Ende in einem zweiten Grad, größer als der erste Grad, aus der Befestigungsabschnittsbohrung durch die untere Oberfläche in den Befestigungsabschnitt hineinragt und so in die innere Oberfläche der zweiten Gliedbohrung eingreift, wodurch das zweite Glied an Ort und Stelle gesichert wird, so dass, wenn das zweite Glied in dem Befestigungsabschnitt des ersten Glieds gesichert ist, ein Abschnitt des zweiten Glieds, der zwischen der inneren Oberfläche (24i, 124i) und mindestens einer Seitenfläche (25, 125, 225) des zweiten Glieds (20, 120, 220) bestimmt ist, die zur Seitenwand (15, 115, 215) des Befestigungsabschnitts hin weist, zwischen dem distalen Ende (32a, 132a, 232a) des Sicherungsstifts (32, 132, 232) und der Seitenwand (15, 115, 215) befestigt wird, und **dadurch gekennzeichnet, dass** die Stiftachse winklig zur inneren Oberfläche (24i, 124i) des zweiten Glieds ist, wenn das zweite Glied im Befestigungsabschnitt des ersten Glieds gesichert ist, und der Sicherungsstift ausgebildet ist, um Druck auf die innere Oberfläche der zweiten Gliedbohrung auszuüben und dadurch einen festen Eingriff der mindestens einen Seitenfläche des zweiten Glieds (20, 120, 220) mit der mindestens einen Seitenwand des Befestigungsabschnitts des ersten Glieds zu erleichtern.

2. Eine Befestigungsanordnung gemäß Anspruch 1, wobei sowohl in der Befestigungsposition als auch in der Sicherungsposition der Sicherungsstift in Eingriff mit dem ersten Glied bleibt.

3. Eine Befestigungsanordnung gemäß Anspruch 1 oder 2, wobei sich sowohl in der Befestigungsposition als auch in der Sichemngsposition das proximale Ende innerhalb der Befestigungsabschnittsbohrung befindet.

4. Eine Befestigungsanordnung gemäß einem beliebigen der Ansprüche 1 bis 3, wobei die Verschiebungsanordnung eine Anordnung separat vom Sicherungsstift ist, ausgebildet, um den Sicherungsstift, oder das proximale Ende davon, mechanisch zu halten, so dass eine Verschiebung der Anordnung eine Verschiebung des Sicherungsstifts in die axiale Richtung beinhaltet.

5. Eine Befestigungsanordnung gemäß Anspruch 4, wobei der Verschiebüngsmechanismus eine Vorspannfeder ist, so dass eine Änderung der Position des Sicherungsstifts in die Befestigungsposition durch einfaches Eindrücken der Vorspannfeder erreicht wird.

6. Eine Befestigungsanordnung gemäß einem beliebigen der Ansprüche 1 bis 5, wobei das erste Glied mit zwei gegenüber angeordneten Schultern (13, 113) ausgestattet ist, von denen jede eine Seitenfläche (15, 115, 125) hat, wobei das zweite Glied aufgrund der Seitenfläche sicher an Ort und Stelle gehalten und daran gehindert wird, sich in eine Richtung (z B. im Uhrzeigersinn) zu drehen, und in die andere Richtung (gegen den Uhrzeigersinn) aufgrund des Sicherungsstifts.

7. Eine Befestigungsanordnung gemäß Anspruch 6, wobei die Seitenflächen des ersten Glieds eine Schraubenform haben.

8. Eine Befestigungsanordnung gemäß Anspruch 7, wobei sowohl das erste Glied als auch das zweite Glied kreisförmig und mit entsprechenden schraubenförmigen Seitenflächen versehen sind.

9. Eine Befestigungsanordnung gemäß Anspruch 6, 7 oder 8, wobei die untere Oberfläche des Befestigungsabschnitts des ersten Glieds eine kegelförmige Anordnung im Verhältnis zur Mittelachse davon hat, z. B. mit einer Außenkante und einer Innenkante, wobei die Außenkante axial unterhalb der Innenkante positioniert ist.

10. Eine Befestigungsanordnung gemäß Anspruch 9, wobei die Konfiguration die automatische Selbstzentrierung des zweiten Glieds im Verhältnis zum ersten Glied erleichtert.

11. Eine Befestigungsanordnung gemäß einem beliebigen der obigen Ansprüche, wobei jedes der ersten und zweiten Glieder mit einem Abschnitt (16, 26) mit Flansch ausgestattet ist, so dass, wenn sie aneinander befestigt werden, eine Lücke (n) zwischen den Abschnitten mit Flansch gebildet wird, die das Klemmen eines Gegenstands (S) dazwischen ermöglicht.

12. Eine Befestigungsanordnung gemäß Anspruch 11, wobei jede Schulter mit einer schrägen Bodenfläche (215, 225) versehen ist, die ausgebildet ist, um dem zweiten Glied eine zusätzliche seitliche Stütze zu verleihen.

13. Eine Befestigungsanordnung gemäß Anspruch 12, wobei das erste Glied eine runde Form und eine Mittelachse hat und wobei der Sicherungsstift aufgrund der Neigung der Bodenfläche in einem ersten Winkel geneigt ist und weiter mit Bezug auf die Mittelachse in einem zweiten Winkel geneigt ist.

14. Ein Verfahren zur Befestigung eines zweiten Glieds an einem ersten Glied, wobei das Verfahren Folgendes einschließt:
Bereitstellung einer Befestigungsanordnung gemäß Anspruch 1 und weiter
i. Verschiebung eines Sicherungsstifts des ersten Glieds in eine erste Befestigungsposition, in der das distale Ende davon aus der Befestigungsabschnittsbohrung durch die untere Oberfläche in einem ersten Grad in den Befestigungsabschnitt hineinragt;
ii. Platzierung des zweiten Glieds auf dem Befestigungsabschnitt, so dass die untere Oberfläche davon mit der unteren Oberfläche des Befestigungsabschnitts fluchtet; und
iii. Verschiebung des Sicherungsstifts in eine zweite Sicherungsposition, in welcher das distale Ende aus der Befestigungsabschnittsbohrung durch die untere Oberfläche in einem zweiten Grad, größer als der erste Grad, in den Befestigungsabschnitt hineinragt und so in die innere Oberfläche der zweiten Gliedbohrung eingreift, wodurch das zweite Glied an Ort und Stelle gesichert wird.

## Revendications

1. Dispositif de fixation (1), comprenant un premier organe (10, 110, 210), adapté pour attacher de manière sûre sur lui un deuxième organe (20, 120, 220) comprenant une face supérieure, une face inférieure et muni d'un perçage de deuxième organe (24, 124, 224), présentant une surface intérieure (24i, 124i) s'étendant entre ladite face supérieure et ladite face inférieure ; ledit premier organe (10, 110, 210) comprenant une partie de fixation, définie par une surface inférieure (12, 112, 212) et au moins une paroi latérale (15, 115, 215), inclinée par rapport à ladite surface inférieure, pour former un épaulement (13, 113) s'étendant axialement à partir de celle-ci, un perçage de partie de fixation (36, 136), avec un axe de perçage ayant une extrémité ouverte à la surface inférieure de ladite partie de fixation, et un mécanisme de retenue (30, 130, 230), pour retenir ledit deuxième organe dans ladite partie de fixation, ledit mécanisme de retenue comprenant une cheville de retenue (32, 132, 232), logée à l'intérieur dudit perçage de partie de fixation (36, 136) et ayant un corps présentant une surface extérieure, s'étendant entre une extrémité proximale (32b, 132b, 232b) et une extrémité distale (32a, 132a, 232a) du corps et définissant un axe de cheville le long de celle-ci, et un dispositif de déplacement (34, 134, 234), adapté pour déplacer axialement ladite cheville de retenue, le long de l'axe de perçage dudit perçage de partie de fixation, entre au moins une première position de fixation, dans laquelle ladite extrémité distale fait saillie de l'intérieur du perçage de partie de fixation, à travers ladite surface inférieure dans ladite partie de fixation, à un premier degré, pour permettre audit deuxième organe d'être placé à l'intérieur de la partie de fixation, ayant sa face inférieure alignée contre ladite surface inférieure, et une deuxième position de fixation, dans laquelle ladite extrémité distale fait saillie de l'intérieur du perçage de partie de fixation, à travers ladite surface inférieure dans ladite partie de fixation, à un deuxième degré, supérieur audit premier degré, de manière à venir en contact avec la surface intérieure dudit perçage de deuxième organe, de manière à maintenir en place ledit deuxième organe, de manière que, lorsque le deuxième organe est fixé à l'intérieur de la partie de fixation du premier organe, une partie du deuxième organe, définie entre la surface intérieure (24i, 124i) et au moins une face latérale (25, 125, 225) du deuxième organe (20, 120, 220), tournée vers la paroi latérale (15, 115, 215) de ladite partie de fixation, est fixée entre l'extrémité distale (32a, 132a, 232a) de ladite cheville de retenue (32, 132, 232) et ladite paroi latérale (15, 115, 215), et **caractérisé en ce que** l'axe de cheville est incliné par rapport à la surface intérieure (24i, 124i) dudit deuxième organe, lorsque le deuxième organe est fixé à l'intérieur de la partie de fixation du premier organe, et la cheville de retenue est adaptée pour appliquer une pression sur la surface intérieure dudit perçage de deuxième organe, de manière à faciliter une mise en prise ferme de la du moins une face latérale du deuxième organe (20, 120, 220) avec ladite au moins une paroi latérale de ladite partie de fixation du premier organe.

2. Dispositif de fixation selon la revendication 1, dans lequel, à la fois à ladite position de fixation et à ladite position de maintien, ladite cheville de retenue reste en prise avec le premier organe.

3. Dispositif de fixation selon la revendication 1 ou 2, dans lequel, à la fois à ladite position de fixation et à ladite position de maintien, ladite extrémité proximale est située à l'intérieur dudit perçage de partie de fixation,

4. Dispositif de fixation selon l'une quelconque des revendications 1 à 3, dans lequel ledit dispositif de déplacement est un dispositif distinct de la cheville de retenue, adapté pour venir mécaniquement en prise avec la cheville de retenue, ou son extrémité proximale, de manière qu'un déplacement du dispositif entraîne un déplacement de la cheville de retenue dans la direction axiale.

5. Dispositif de fixation selon la revendication 4, dans lequel ledit mécanisme de déplacement est un ressort de sollicitation, de manière qu'une commutation de la position de cheville de retenue à la position de fixation soit obtenue par simple enfoncement du ressort de sollicitation.

6. Dispositif de fixation selon l'une quelconque des revendications 1 à 5, dans lequel le premier organe est muni de deux épaulements (13, 113) disposés symétriquement, chacun comprenant un surface latérale (15, 115, 125), dans lequel le deuxième organe est maintenu en place de façon sûre et empêché de tourner dans un sens (par exemple sens horaire) dû à la surface latérale, et dans l'autre sens (sens anti-horaire) du fait de la cheville de retenue.

7. Dispositif de fixation selon la revendication 6, dans lequel les surfaces latérales du premier organe sont de forme hélicoïdale.

8. Dispositif de fixation selon la revendication 7, dans lequel à la fois le premier organe et le deuxième organe sont de forme circulaire, et sont munis de surfaces latérales hélicoïdales correspondantes.

9. Dispositif de fixation selon la revendication 6, 7 ou 8, dans lequel la surface inférieure de la partie de fixation du premier organe présente une configuration conique par rapport à son axe central, par exemple ayant un bord extérieur et un bord intérieur, le bord extérieur étant positionné axialement plus bas que le bord intérieur.

10. Dispositif de fixation selon la revendication 9, dans lequel la configuration facilite un auto-centrage automatique du deuxième organe par rapport au premier organe.

11. Dispositif de fixation selon l'une quelconque des revendications précédentes, **caractérisé en ce que** dans lequel chacun, desdits premier et deuxième organes, est muni d'une partie flasquée (16, 26), de manière que, une fois fixé à un autre, un intervalle (n) soit formé entre les parties flasquées, permettant le serrage d'un article (S) entre elles.

12. Dispositif de fixation selon la revendication 11, dans lequel chaque épaulement est muni d'une surface inférieure (215, 225) inclinée, adaptée pour fournir un support latéral additionnel au deuxième organe.

13. Dispositif de fixation selon la revendication 12, dans lequel ledit premier organe est de forme ronde et présente un axe central, et dans lequel ladite cheville de retenue est inclinée d'un premier angle du fait de l'inclinaison de ladite surface inférieure, et est en outre inclinée d'un deuxième angle par rapport à l'axe central.

14. Procédé de fixation d'un deuxième organe à un premier organe, ledit procédé comprenant :
la fourniture d'un dispositif de fixation selon la revendication 1, et, en outre,
i. le déplacement d'une cheville de retenue dudit premier organe en une première position de fixation, dans laquelle son extrémité distale fait saillie de l'intérieur du perçage de partie de fixation, à travers ladite surface inférieure, dans ladite partie de fixation, un premier degré ;
ii. le placement dudit second organe sur ladite partie de fixation, de manière que sa face inférieure soit alignée avec la surface inférieure de ladite partie de fixation ; et
iii. le déplacement de ladite cheville de retenue en une deuxième position de fixation, dans laquelle ladite extrémité distale fait saillie de l'intérieur du perçage de partie de fixation, à travers ladite surface inférieure, dans ladite partie de fixation, à un deuxième degré, supérieur audit premier degré, de manière à venir en prise avec la surface intérieure dudit perçage de deuxième organe, maintenant de cette manière en place ledit deuxième organe.
